# EUROPEAN PATENT SPECIFICATION

(11) **EP 1 346 377 B1**
(45) Date of publication and mention of the grant of the patent: **13.06.2007**
(21) Application number: 01986411.5
(22) Date of filing: 14.12.2001
(51) Int. Cl.: H01B 7/02, H01B 9/00, H01B 3/44, C08F 8/46, C08K 5/00

(54) **ELECTRICAL CABLE, PARTICULARLY FOR HIGH VOLTAGE DIRECT CURRENT TRANSMISSION OR DISTRIBUTION, AND INSULATING COMPOSITION**
ELEKTRISCHES KABEL, INSBESONDERE ZUR TRANSMISSION UND VERTEILUNG VON HOCHSPANNUNGS-GLEICHSTROM, UND ISOLATIONSMISCHUNG
CABLE ELECTRIQUE, EN PARTICULIER POUR LA TRANSMISSION OU LA DISTRIBUTION DE COURANT CONTINU HAUTE TENSION ET COMPOSITION ISOLANTE

(30) Priority: 27.12.2000 EP 00128567; 03.01.2001 US 259208 P
(43) Date of publication of application: 24.09.2003
(73) Proprietor: Prysmian Cavi e Sistemi Energia S.r.l., 20126 Milano (IT)
(72) Inventor: PEREGO, Gabriele, I-20144 Milano (IT); ALBIZZATI, Enrico, I-28040 Lesa (IT)
(74) Representative: Checcacci, Giorgio
(86) International application number: PCT/EP2001/014765
(87) International publication number: WO 2002/052582

(56) References cited:
- DATABASE WPI Week 9230 Derwent Publications Ltd., London, GB; AN 1992-180583 XP002169101 & JP 04 118808 A (NIPPON PETROCHEMICALS), 20 April 1992 (1992-04-20)
- DATABASE WPI Week 9436 Derwent Publications Ltd., London, GB; AN 1994-288414 XP002169102 & JP 06 215645 A (SUMITOMO ELECTRIC IND CO), 5 August 1994 (1994-08-05) cited in the application
- DATABASE WPI Week 9347 Derwent Publications Ltd., London, GB; AN 1993-371306 XP002169103 & JP 05 266724 A (SUMITOMO ELECTRIC CO), 15 October 1993 (1993-10-15) cited in the application
- DATABASE WPI Section Ch, Week 199131 Derwent Publications Ltd., London, GB; Class A17, AN 1991-228209 XP002201008 & JP 03 149207 A (SHOWA DENKO), 25 June 1991 (1991-06-25)

## Description

The present invention relates to an electrical cable, particularly for high voltage direct current transmission or distribution, and to the insulating composition used therein.

More particularly, the present invention relates to an electrical cable, particularly for high voltage direct current transmission or distribution, which is suitable for either terrestrial or submarine installations, comprising a conductor and an extruded insulating coating consisting of a polymeric composition comprising a polyethylene modified with at least one unsaturated carboxylic acid or a derivative thereof.

The present invention moreover relates to an insulating composition comprising a polyethylene modified with at least one unsaturated carboxylic acid or a derivative thereof.

For the purposes of the present description and the claims, the term "high tension" means a tension of greater than 35 kV.

The cables generally used for high voltage direct current transmission, either along terrestrial lines or, particularly, along submarine lines, are cables commonly known in the art, such as mass-impregnated cables in which the conductor, coated with a first semiconducting layer, is electrically insulated by being wound with an insulating material, generally paper or paper/polypropylene/paper multilayer laminates, which is then totally impregnated with a mixture with high electrical resistivity and high viscosity, generally a hydrocarbon oil containing a viscosity-increasing agent. The cable then comprises a further semiconducting layer and a metal screen, generally made of lead, which is itself surrounded by at least one metal armouring structure and by one or more plastic protective sheaths.

Although mass-impregnated cables are characterized by high reliability in operation even at very high voltages (greater than 150 kV), they have a number of drawbacks mainly associated with migration of the insulating fluid inside the cable. Particularly, during use, the cable is subjected, owing to variations in the intensity of the current transmitted, to thermal cycles which cause migrations of the fluid in the radial direction. As a matter of fact, when the current carried increases and the cable heats up, the viscosity of the insulating fluid decreases and the fluid is subjected to a thermal expansion greater than all the other components of which the cable is made. This leads to migration of the fluid from the insulating layer towards the exterior and, consequently, to an increase in the pressure exerted on the metal screen, which is deformed in the radial direction. When the current carried decreases and the cable cools down, the impregnating fluid contracts, whereas the metal screen, which is made of a plastic material (usually lead), remains permanently deformed. This therefore results in a decrease in the internal pressure of the cable, leading to the formation of microcavities in the insulating layer with a consequent risk of electric discharges and, hence, of perforation of the insulation. The risk of perforation increases as the thickness of the insulating layer increases and, hence, as the maximum voltage for which the cable was intended increases.

Another solution for high voltage direct current transmission consists of cables with fluid oil, in which the insulation is provided by a pressurized oil of low viscosity and high electrical resistivity (under a hydrostatic head). Although this solution is highly effective in terms of avoiding the formation of microcavities in the cable insulation, it has a number of drawbacks mainly associated with the complexity of construction and, particularly, results in a limitation of the maximum permissible length of the cable. This limitation of the maximum length is a major drawback, especially as regards submarine use, in which the lengths required are usually very great.

For many years, research has been directed towards the possibility of using cross-linked polyolefins, and particularly cross-linked polyethylene (XLPE), to produce insulating materials for cables for direct current transmission. Insulating materials of this type are already widely used in the case of cables for alternating current transmission. The use of said insulating materials also in the case of cables for direct current transmission would allow said cables to be used at higher temperatures, for example at 90°C instead of 50°C, compared with the mass-impregnated cables described above (higher working temperatures, making it possible to increase the amount of current transported) and would eliminate limitations in the maximum permissible length of the cable, in contrast with the cables containing fluid oil described above.

However, it has not hitherto been possible to adequately and fully exploit said insulating materials, particularly for direct current transmission. It is commonly believed that one of the main reasons for this limitation is the development and accumulation of so-called space charges in the dielectric insulating material when said material is subjected to a direct current. It is thought that space charges alter the distribution of the electrical field and persist for long periods on account of the high resistivity of the polymers used. The accumulation of space charges leads to a local increase in the electrical field, which is consequently greater than that which would be expected considering the geometrical dimensions and the dielectric properties of the insulating material.

The accumulation of space charges is a slow process: however, the problem is accentuated when the direct current transported by the cable is reversed (in other words, if there is a reversal of polarity). As a result of this reversal, a capacitive field is superimposed on the whole electrical field and the value of the maximum gradient can be localized within the insulating material.

It is known that a prolonged degassing treatment, which may be carried out, for example, by subjecting the insulating material based on a cross-linked polymer to high temperatures and/or to a high vacuum for a long period, makes it possible to obtain an insulating material which is capable of limiting the accumulation of space charges when the cable is subjected to polarity reversal. In general, it is thought that, by virtue of the removal of the decomposition products of the cross-linking agent (for example dicumyl peroxide which forms acetophenone and cumyl alcohol on decomposition) from the insulating material, said degassing treatment reduces the formation of space charges. However, a prolonged degassing treatment obviously leads to an increase in the production times and costs.

In efforts to reduce the accumulation of space charges, it is known practice to modify cross-linked polyethylene (XLPE) by introducing small amounts of polar groups.

For example, Japanese patent application JP-A-210 610 discloses a cross-linked polyethylene which is modified by grafting with an amount of maleic anhydride of between 0.02% and 0.5% by weight, this product said to be usable as an insulating material for cables for direct current transmission since it is said to be capable of trapping the space charges and thus reducing their accumulation.

Japanese patent application JP 10/283 851 discloses a cable for direct current transmission which has improved dielectric rigidity, in the presence of polarity reversals or following applications of electrical pulses, in which the insulating coating consists of a polymeric composition comprising a crosslinked polyolefin containing (i) a dicarboxylic acid anhydride and (ii) at least one monomer containing, a polar group (chosen from at least one carbonyl, nitrile or nitro group). However, a particular peroxide, more specifically 2,5-dimethyl-2,5-di (t-butylperoxy) hexane, and a particular antioxidant, more specifically a thiocarboxylic acid ester, are required.

Patent application EP-A-0 463 02 discloses an ethylene (co) polymer containing polar groups chosen from ketone, nitrile and nitro groups in an amount of between 20 ppm and 8 000 ppm, said polar groups having a dipole moment of greater than 0.8 debye. Said (co) polymer is said to be usable as an insulating material for high voltage cables with improved dielectric rigidity.

Patent application WO 99/40589 relates to a cable for direct current transmission, in which the insulating coating consists of cross-linked polyethylene comprising polar groups obtained by pretreating the polyethylene with molecular oxygen before extrusion.

Patent application WO 99/44207 relates to a cable for direct current transmission, in which the insulating coating consists of a polymeric composition based on cross-linked polyethylene modified with polar groups. Said polar groups, having the general formula: CH₂=CR-CO-X-(CH₂)n-N(CH₃)₂ or CH₂=CR-CO-O-(CH₂-CH₂O)n-H in which n is 2 or 3, m is a number between 1 and 20, R is H or CH₃ and X is O or NH, are introduced into the cross-linked polyethylene by co-polymerization or grafting. Examples of said polar groups are dialkylaminopropyl(meth) acrylamide and (oligo)ethyleneglycol-methacrylate.

Japanese patent application JP 06/215 645 discloses a cable for high voltage direct current transmission which shows a reduced accumulation of space charges. The insulating coating is prepared by hot cross-linking of a blend of a polyethylene, an organic peroxide having a half-life at 130°C of greater than 5 hours and an acid chosen from itaconic acid and crotonic acid in an amount of less than 5 parts by weight per 100 parts by weight of polyethylene.

Japanese patent application JP 05/266 724 discloses a cable for high voltage direct current transmission with a reduced accumulation of space charges. The insulating coating is prepared by:
- adding to the polyethylene a compound chosen, for example, from vinyl acetate, benzoic acid, naphthoic acid and acrylic acid; or
- hot cross-linking of a blend of polyethylene, an organic peroxide with a half-life at 130°C of greater than 5 hours and a compound chosen, for example, from vinyl acetate, benzoic acid, naphthoic acid and acrylic acid.

Said compound is present in an amount of up to 10 parts by weight per 100 parts by weight of polyethylene.

The polyethylene of the resulting insulating coating is chemically unmodified.

Patent application WO 00/08655 relates to a cable for direct current transmission, in which the insulating coating consists of a polymeric composition based on polyethylene added with an esterified (poly)glycerol containing at least two free OH groups.

Japanese patent application JP 04/118 808 discloses an ethylene-based polymer or an ethylene-based polymer composition comprising: (a) 89.2-98.998 wt% of ethylene unit; (b) 1 to 10 wt% of unsaturated carboxylic acid ester and/or vinyl ester unit; and (c) 0.002 to 0.8 wt% of at least one type of polar group unit selected from a group comprising monomers containing ketone group, nitrilo group or nitro group, for preventing the generation of water-tree without affecting the electrical insulating properties of a power cable employing said ethylene-based polymer or said ethylene-based polymer composition.

The Applicant has now found that it is possible to reduce the local accumulation of space charges in the insulating coating of an electrical cable, in particular a cable for high voltage direct current transmission or distribution, by using, as insulating coating, a polymeric composition comprising a polyethylene modified with at least one unsaturated carboxylic acid or a derivative thereof as defined hereinbelow [for simplicity, in the text hereinbelow, this is referred to as the compound of general formula (I)]. The compound of general formula (I) which is suitable for carrying out the present invention has high compatibility with the polyethylene, is readily dispersible therein and is capable of grafting to the polyethylene in high yield: consequently, the cable thus insulated is capable of giving better electrical performance qualities when used for high voltage direct current transmission or distribution, in particular in the presence of polarity reversals.

In a first aspect, the present invention thus relates to an electrical cable, particularly for high voltage direct current transmission or distribution, comprising at least one conductor and at least one extruded insulating coating layer consisting of a polymeric composition comprising a polyethylene modified with at least one compound of general formula (I): 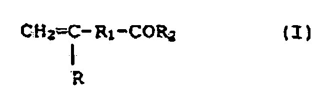 in which
- R represents H or CH₃;
- R₁ represents a linear or branched, preferably linear, C₁-C₈ alkylene group;
- R₂ represents OH; a group NR₄R₅ in which R₄ and R₅, which may be identical or different, represent H, or a linear or branched C₁-C₄ alkyl group.

In the present description and in the claims which follow, the term "conductor" means a conductive element in unmodified form, of elongate shape and preferably made of a metal material, or a conductive element coated with a semiconducting layer. As will be specified more clearly hereinbelow, the latter solution, which envisages the use of a semiconducting layer on both the inside and outside of the insulating coating, is typically used for electrical cables.

In a second aspect, the present invention relates to an insulating composition comprising a polyethylene modified with at least one compound of general formula (I): 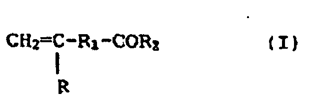 in which:
- R represents H or CH₃;
- R₁ represents a linear or branched, preferably linear, C₁-C₈ alkylene group;
- R₂ represents OH; a group NR₄R₅ in which R₄ and R₅, which may be identical or different, represent H, or a linear or branched C₁-C₄ alkyl group.

In a further aspect, the present invention relates to a method for reducing the accumulation of space charges in an electrical cable during the high voltage direct current transmission or distribution, comprising at least one conductor and at least one extruded insulating coating layer consisting of a polymeric composition comprising a polyethylene, said method comprising modifying said polyethylene with at least one compound of general formula (I): 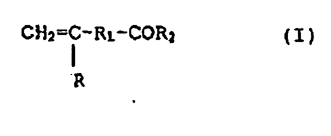 in which:
- R represents H or CH₃;
- R₁ represents a linear or branched, preferably linear, C₁-C₈ alkylene group;
- R₂ represents OH; a group NR₄R₅ in which R₄ and R₅, which may be identical or different, represent H, or a linear or branched C₁-C₄ alkyl group.

According to a preferred embodiment, the polyethylene (PE) is an ethylene homopolymer or a copolymer of ethylene with at least one α-olefin having a density of between 0.860 g/cm³ and 0.970 g/cm³, preferably between 0.865 g/cm³ and 0.940 g/cm³.

For the purposes of the present description and the claims, the term "α-olefin" means an olefin of general formula CH₂=CH-R' in which R' represents a linear or branched alkyl group containing from 1 to 10 carbon atoms. The α-olefin may be chosen, for example, from: propylene, 1-butene, 1-pentene, 4-methyl-1-pentene, 1-hexene, 1-octene, 1-dodecene, or mixtures thereof. The following are preferred: 1-butene, 1-hexene and 1-octene. The amount of α-olefin optionally present is generally between 0.5 mol% and 15 mol%, preferably between 1 mol% and 10 mol%.

The polyethylene is preferably chosen from: high density polyethylene (HDPE) having a density of at least 0.940 g/cm³ preferably of between 0.940 g/cm³ and 0.960g g/cm³; medium density polyethylene (MDPE) having a density of between 0.926 g/cm³ and 0.940 g/cm³; low density polyethylene (LDPE) and linear low density polyethylene (LLDPE) having a density of between 0.910 g/cm³ and 0.926 g/cm³.

According to one preferred embodiment, said polyethylene is modified by grafting with at least one compound of general formula (I). Said grafting may be carried out on the base polyethylene (pre-grafting) or during a process of cross-linking of the polymeric composition which constitutes the insulating coating layer. The grafting may be carried out according to known techniques such as, for example, a radical-mediated route in the presence of an organic peroxide.

According to a further embodiment, said polyethylene is modified by co-polymerization of the ethylene with at least one compound of general formula (I). The addition of said compound of general formula (I) may take place before or during the polymerization reaction: in this way, the compound of general formula (I) will be incorporated into the structure of the polymer and integrated into the polyethylene chain.

According to a preferred embodiment, the compound of general formula (I) is chosen from: unsaturated carboxylic acids such as, for example, vinylacetic acid, allylacetic acid, 4-methyl-4-pentenoic acid, 3-pentenoic acid, 10-undecenoic acid, or mixtures thereof; amides such as, for example, N,N-dimethylallylacetamide, N,N-diethylallylacetamide, N,N-dibutylallylacetamide, N, N-dipropylallylacetamide, or mixtures thereof. Allylacetic acid is particularly preferred.

If the modified polyethylene is cross-linked, said cross-linking is carried out via a radical-mediated route by thermal decomposition of a radical initiator, usually of an organic peroxide such as, for example, dicumyl peroxide, t-butyl cumyl peroxide, 2,5-dimethyl-2,5-di(t-butylperoxy) hexane or di-t-butyl peroxide, which is absorbed onto the polyethylene before extrusion or is injected directly into the extruder. The amount of radical initiator used is generally between 0.1 and 5 parts by weight per 100 parts by weight of the composition.

In this case, the extrusion temperature of the material which constitutes the insulating coating layer is kept below the decomposition temperature of the peroxide used. For example, when dicumyl peroxide is used, the extruder temperature is maintained at about 130°C to avoid scorching of the insulating material and the cross-linking process is carried out at a temperature of between 180°C and 280°C.

The compound of general formula (I) grafts to the polyethylene in a grafting yield of between 80% and 100%. When residues of said unreacted compound of general formula (I) remain, said residues may be removed by degassing.

When the grafting takes place during the cross-linking of the material which constitutes the insulating coating layer, the addition of the compound of general formula (I) may be carried out either by absorbing this material onto polyethylene granules or powder before the extrusion or by injecting and mixing this material with the molten polyethylene during the extrusion.

Alternatively, as already mentioned above, a polyethylene modified by co-polymerization with at least one compound of general formula (I), or a polyethylene which has been modified beforehand by pre-grating with at least one compound of general formula (I), may be used. In this case also, the polyethylene thus modified may be cross-linked by working according to known techniques as described above.

The amount of compound of general formula (I) present in the insulating composition is generally between 0.01% and 7% by weight and preferably between 0.10% and 3% by weight.

The insulating composition described above may optionally comprise an effective amount of one or more conventional additives such as, for example, antioxidants, processing co-adjuvants, lubricants, pigments, water-tree retardants, voltage stabilizers, anti-scorching agents, and the like.

Antioxidants generally useful for this purpose include: 4,4'-thiobis (6-t-butyl-m-cresol) (known under the trade name Santonox® TBMC from Flexsys), tetrakis[3-(3,5-di-t-butyl-4-hydroxyphenyl)propionyloxymethyl methane (known under the trade name Irganox® 1010 from Ciba), 2,2'-thiobis(4-methyl-6-t-butylphenol) (known under the trade name Irganox® 1081 from Ciba), 2,2'-thiodiethylenebis[3-(3,_5-di-t-butyl-4-hydroxyphenyl) propionate] (known under the trade name Irganox® 1035 from Ciba) and thiocarboxylic acid esters, or mixtures thereof.

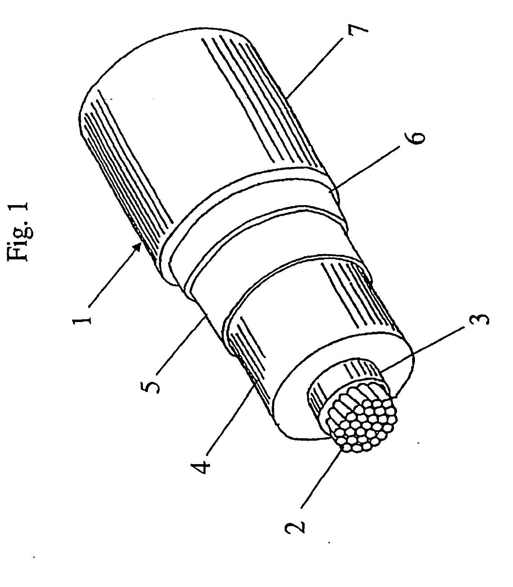

The attached Figure 1 illustrates one embodiment of the cable according to the present invention, and in particular shows, in perspective view, a section of cable with parts removed step by step to demonstrate its structure.

With reference to Figure 1, the cable 1 according to the present invention comprises in sequence, from the centre outwards: a conductor 2, an inner semiconducting layer 3, an insulating coating layer 4, an outer semiconducting layer 5, a metal screen 6 and an outer sheath 7.

The conductor 2 generally consists of metal wires, preferably copper and aluminium wires, stranded together according to conventional techniques. The inner and outer semiconducting layers 3 and 5, generally consisting of a polyolefin-based polymeric composition containing a conductive filler (for example carbon black), are extruded over the conductor 2, separately or together with the insulating coating layer 4 according to the present invention. Around the outer semiconducting layer 5 is usually placed a screen 6, generally consisting of electrically conductive wires or tapes, wound helically. This screen is then covered with a sheath 7, consisting of a thermoplastic material, for example non-cross-linked polyethylene (PE) or, preferably, a propylene homopolymer or copolymer.

The cable may moreover be provided with an outer protective structure (not represented in Figure 1) which serves mainly to protect the cable against mechanical impacts and/or compression. This protective structure may be, for example, metal armouring or a layer of expanded polymeric material as disclosed in patent application WO 98/52197.

Figure 1 shows only one possible embodiment of a cable according to the present invention: it goes without saying that changes known in the art may be made to this embodiment without thereby departing from the scope of the present invention.

The cable according to the present invention can be prepared using known techniques for depositing layers of thermoplastic material, for example by means of extrusion. The extrusion is advantageously carried out in a single pass, for example by means of the "tandem" technique, in which individual extruders arranged in series are used, or by means of co-extrusion with a multiple-extrusion head.

The present invention is now further described in the example which follows, which is given purely for illustrative purposes and should not be considered as limiting the invention in any way.

### EXAMPLE 1

99.5 g of low density polyethylene (LDPE LE 4201 S from Borealis, containing 2.1% by weight of dicumyl peroxide) and 0.5 g of allylacetic acid (Fluka; purity > 98%) were introduced into a 200 ml roundbottomed flask with stirring.

The temperature was then raised to 50°C and the mixture was maintained at this temperature, with stirring, for three hours until the allylacetic acid was completely absorbed.

Films were prepared from the mixture thus obtained, by press-moulding at 130°C followed by cross-linking at 180°C.

The moulding conditions were as follows:
- dimensions of the mould: 20 x 20 cm;
- pressure: 170 bar;
- amount of material: 4.5 g;
- thermoforming temperature:130°C;
- duration of thermoforming: 5 min;
- cross-linking temperature:180°C;
- cross-linking time: 30 min;
- cooling time: 30 min.

The films obtained as described above were 20 x 20 cm in size and about 120 um thick.

Samples 7 x 7 cm in size were cut from the abovementioned films and subjected to an electrical ageing test both in the absence and in the presence of polarity reversal: the results obtained are given in Table 1. Samples with the same polyethylene without addition of allylacetic acid were produced, as described above, for comparative purposes.

The test was carried out as follows.

The abovementioned samples were placed between two stainless steel electrodes having a Rogowski profile, immersed in a silicone oil so as to prevent external discharges during the test, and a direct-current electrical field equal to a gradient of 185 kV/mm with positive polarity was applied at ambient temperature. After 3 hours, the polarity was reversed and the operation was continued in this manner until all the samples were perforated. The test was repeated without reversing the polarity.

The lifetimes were calculated from the data obtained from the tests carried out on8 samples by subjecting said data to Weibull processing: the results are given in Table 1.

**TABLE 1**

| MATERIAL | LIFETIME AT 185 kV/mm (hours) | |
|---|---|---|
| | WITHOUT REVERSALS | WITH REVERSALS |
| XLPE | 150 | 60 |
| XLPE-g-AA* | 672 | 116 |

| | | |
|---|---|---|
| AA*: allylacetic acid | | |

### EXAMPLE 2

A high voltage cable prototype was produced, in which the insulating coating layer consisted of a polymeric composition according to the present invention.

The cable was prepared by co-extrusion of the three layers, using a three-head extruder, i. e. three separate extruders opening into a single extrusion head, so as to obtain the co-extrusion of the semiconductor coatings and of the insulating coating.

Thus, an aluminium conductor (consisting of a plurality of aluminium wires stranded together to form a cross section of about 70 mm²), was coated on the extrusion line with an inner semiconducting coating 0.5 mm thick comprising an ethylene/butyl acrylate copolymer and carbon black.

A 45 mm single-screw Bandera extruder, of configuration 20D, provided with four zones of heat regulation by using diathermic oil, was used to deposit said inner semiconducting coating.

Over said inner semiconducting coating was extruded an insulating coating 5.5 mm thick comprising low density polyethylene (LDPE LE 4201 S from Borealis) added with 0.5% by weight of allylacetic acid. The addition was carried out by injecting the allylacetic acid into the extruder opening, using a previously calibrated Ismatec piston pump, at a rate so as to give the desired concentration equal to 0.5% by weight.

A 100 mm single-screw Bandera extruder, in configuration 25D, provided with five zones of heat regulation by using diathermic oil and having the following temperature profile: from 115°C to 125°C in the cylinder, 115°C on the collar and 115°C in the head, was used to deposit said inner insulating coating.

An outer semiconducting coating 0.5 mm thick having the same composition as the inner semiconducting coating was then extruded in a position radially external to said insulating coating by working as described above.

A 60 mm single-screw Bandera extruder, in configuration 20D, provided with five zones of heat regulation by using diathermic oil, was used to deposit said outer semiconducting coating.

The extrusion line had a speed of 2 m/min. The cable thus obtained had an insulating coating layer of 5.5 mm. A thin slice equal to about 150 um thick of said cable was cut off, using a microtome, and was then placed in an oven at 80°C until the cross-linking by-products had been completely removed.

The sample thus obtained was characterized by infrared spectroscopy (FTIR), on a pre-calibrated machine, using the ratio between the band at 1711 cm⁻¹ (allylacetic acid) and the band at 1377 cm⁻¹ (polyethylene). The measurement was repeated, after treating the sample in a Soxhlet extractor with chloroform for 24 hours, so as to remove the ungrafted reaction products and obtain the grafting yield, which was equal to 100%.

## Claims

1. Electrical cable comprising at least one conductor and at least one extruded insulating coating layer consisting of a polymeric composition comprising a polyethylene modified with at least one compound of general formula (I): 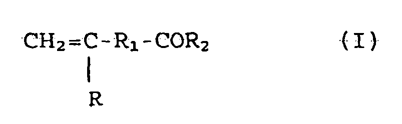 in which:
- R represents H or CH₃;
- R₁ represents a linear or branched C₁-C₈ alkylene group;
- R₂ represents OH; a group NR₄R₅ in which R₄ and R₅, which may be identical or different, represent H, or a linear or branched C₁-C₄ alkyl group.

2. Electrical cable according to Claim 1, in which R₁ represents a linear C₁-C₈ alkylene group.

3. Electrical cable according to Claim 1 or 2, in which the polyethylene is an ethylene homopolymer or a copolymer of ethylene with at least one α-olefin having a density of between 0.860 g/cm³ and 0.970 g/cm³.

4. Electrical cable according to Claim 3, in which the polyethylene is an ethylene homopolymer or a copolymer of ethylene with at least one α-olefin having a density of between 0.865 g/cm³ and 0.940 g/cm³.

5. Electrical cable according to Claim 3 or 4, in which the α-olefin is an olefin of general formula CH₂=CH-R' in which R' represents a linear or branched alkyl group containing from 1 to 10 carbon atoms.

6. Electrical cable according to Claim 5, in which the α-olefin is chosen from: propylene, 1-butene, 1-pentene, 4-methyl-1-pentene, 1-hexene, 1-octene, 1-dodecene, or mixtures thereof.

7. Electrical cable according to any one of the preceding claims, in which the polyethylene is chosen from: high density polyethylene having a density of at least 0.940 g/cm³; medium density polyethylene having a density of between 0.926 g/cm³ and 0.940 g/cm³; low density polyethylene and linear low density polyethylene having a density of between 0.910 g/cm³ and 0 . 92 6 g/cm³ .

8. Electrical cable according to any one of Claims 1 to 7, in which the polyethylene is modified by pre-grafting with at least one compound of general formula (I).

9. Electrical cable according to Claim 8, in which the polyethylene is not cross-linked.

10. Electrical cable according to Claim 8, in which the polyethylene is cross-linked.

11. Electrical cable according to any one of Claims 1 to 7, in which the polyethylene is modified by grafting with at least one compound of general formula (I) during a process of cross-linking of the polymeric composition which constitutes the insulating coating layer.

12. Electrical cable according to any one of Claims 1 to 7, in which the polyethylene is modified by co-polymerization of the ethylene with at least one compound of general formula (I).

13. Electrical cable according to Claim 12, in which the polyethylene is not cross-linked.

14. Electrical cable according to Claim 12, in which the polyethylene is cross-linked.

15. Electrical cable according to any one of the preceding claims, in which the compound of general formula (I) is chosen from: vinylacetic acid, allylacetic acid, 4-methyl-4-pentenoic acid, 3-pentenoic acid, 10-undecenoic acid, or mixtures thereof.

16. Electrical cable according to Claim 15, in which the compound of general formula (I) is allylacetic acid.

17. Electrical cable according to any one of Claims 1 to 14, in which the compound of general formula (I) is chosen from: N,N-dimethylallylacetamide, N,N-diethylallylacetamide, N,N-dibutylallylacetamide, N,N-dipropylallylacetamide, or mixtures thereof.

18. Electrical cable according to any one of the preceding claims, in which the compound of general formula (I) is present in an amount of between 0.01% and 7% by weight.

19. Electrical cable according to Claim 18, in which the compound of general formula (I) is present in an amount of between 0-10% and 3% by weight.

20. Insulating composition comprising a polyethylene modified with at least one compound of general formula (I): 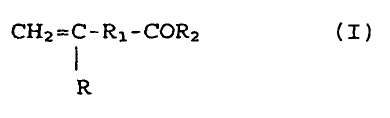 in which:
- R represents H or CH₃;
- R₁ represents a linear or branched C₁-C₈ alkylene group;
- R₂ represents OH; a group NR₄R₅ in which R₄ and R₅, which may be identical or different, represent H, or a linear or branched C₁-C₄ alkyl group.

21. Insulating composition according to Claim 20, in which the polyethylene is defined according to Claims 3 to 14.

22. Insulating composition according to Claim 20 or 21, in which the compound of general formula (I) is defined according to Claims 15 to 17.

23. Insulating composition according to any one of Claims 20 to 22, in which the compound of general formula (I) is present in an amount of between 0.01% and 7% by weight.

24. Insulating composition according to Claim 23, in which the compound of general formula (I) is present in an amount of between 0.10% and 3% by weight.

25. Method for reducing the accumulation of space charges in an electrical cable during the high voltage direct current transmission or distribution, comprising at least one conductor and at least one extruded insulating coating layer consisting of a polymeric composition comprising a polyethylene, said method comprising modifying said polyethylene with at least one compound of general formula (I): 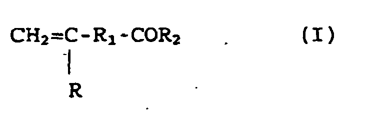 in which:
- R represents H or CH₃;
- R₁ represents a linear or branched C₁-C₈ alkylene group;
- R₂ represents OH; a group NR₄R₅ in which R₄ and R₅, which may be identical or different, represent H, or a linear or branched C₁-C₄ alkyl group.

26. Method according to Claim 25, in which the polyethylene is defined in Claims 3 to 14.

27. Method according to Claim 25 or 26, in which the compound of general formula (I) is defined in Claims 15 to 17.

28. Method according to any one of Claims 25 to 27, in which the compound of general formula (I) is present in an amount of between 0.01% and 7% by weight.

29. Method according to Claim 28, in which the compound of general formula (I) is present in an amount of between 0.10% and 3% by weight.

## Patentansprüche

1. Elektrisches Kabel, das mindestens einen Leiter und mindestens eine extrudierte Isolierüberzugsschicht umfaßt, die aus einer Polymerzusammensetzung besteht, die ein Polyethylen, das mit mindestens einer Verbindung der allgemeinen Formel (I) modifiziert ist, umfaßt: 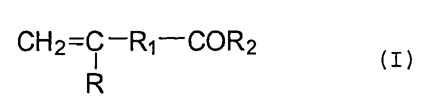 in der:
R H oder CH₃ bedeutet;
R₁ eine lineare oder verzweigte C₁-C₈-Alkylengruppe bedeutet;
R₂ bedeutet OH; eine Gruppe NR₄R₅, in der R₄ und R₅, die gleich oder verschieden sein können, H oder eine lineare oder verzweigte C₁-C₄-Alkylgruppe bedeuten.

2. Elektrisches Kabel gemäß Anspruch 1, in dem R₁ eine lineare C₁-C₈-Alkylengruppe bedeutet.

3. Elektrisches Kabel gemäß Anspruch 1 oder 2, in dem das Polyethylen ein Ethylen-Homopolymer oder ein Copolymer von Ethylen mit mindestens einem α-Olefin mit einer Dichte zwischen 0,860 g/cm³ und 0,970 g/cm³ ist.

4. Elektrisches Kabel gemäß Anspruch 3, in dem das Polyethylen ein Ethylen-Homopolymer oder ein Copolymer von Ethylen mit mindestens einem α-Olefin mit einer Dichte zwischen 0,865 g/cm³ und 0,940 g/cm³ ist.

5. Elektrisches Kabel gemäß Anspruch 3 oder 4, in dem das α-Olefin ein Olefin-der allgemeinen Formel CH₂=CH-R' ist, in der R' eine lineare oder verzweigte Alkylgruppe, die 1 bis 10 Kohlenstoffatome enthält, bedeutet.

6. Elektrisches Kabel gemäß Anspruch 5, in dem das α-Olefin ausgewählt ist aus: Propylen, 1-Buten, 1-Penten, 4-Methyl-1-penten, 1-Hexen, 1-Octen, 1-Dodecen oder Mischungen davon.

7. Elektrisches Kabel gemäß mindestens einem der vorhergehenden Ansprüche, in dem das Polyethylen ausgewählt ist aus: Polyethylen hoher Dichte mit einer Dichte von mindestens 0,940 g/cm³; Polyethylen mittlerer Dichte mit einer Dichte zwischen 0,926 g/cm³ und 0,940 g/cm³; Polyethylen niedriger Dichte und linearem Polyethylen niedriger Dichte mit einer Dichte zwischen 0,910 g/cm³ und 0,926 g/cm³.

8. Elektrisches Kabel gemäß mindestens einem der Ansprüche 1 bis 7, in dem das Polyethylen modifiziert ist durch Vorpfropfen mit mindestens einer Verbindung der allgemeinen Formel (I).

9. Elektrisches Kabel gemäß Anspruch 8, in dem das Polyethylen nicht vernetzt ist.

10. Elektrisches Kabel gemäß Anspruch 8, in dem das Polyethylen vernetzt ist.

11. Elektrisches Kabel gemäß mindestens einem der Ansprüche 1 bis 7, in dem das Polyethylen modifiziert ist durch Pfropfen mit mindestens einer Verbindung der allgemeinen Formel (I) während eines Prozesses der Vernetzung der Polymerzusammensetzung, welche die Isolierüberzugsschicht bildet.

12. Elektrisches Kabel gemäß mindestens einem der Ansprüche 1 bis 7, in dem das Polyethylen modifiziert ist durch Copolymerisation des Ethylens mit mindestens einer Verbindung der allgemeinen Formel (I).

13. Elektrisches Kabel gemäß Anspruch 12, in dem das Polyethylen nicht vernetzt ist.

14. Elektrisches Kabel gemäß Anspruch 12, in dem das Polyethylen vernetzt ist.

15. Elektrisches Kabel gemäß mindestens einem der vorhergehenden Ansprüche, in dem die Verbindung der allgemeinen Formel (I) ausgewählt ist aus: Vinylessigsäure, Allylessigsäure, 4-Methyl-4-pentensäure, 3-Pentensäure, 10-Undecensäure oder Mischungen davon.

16. Elektrisches Kabel gemäß Anspruch 15, in dem die Verbindung der allgemeinen Formel (I) Allylessigsäure ist.

17. Elektrisches Kabel gemäß mindestens einem der Ansprüche 1 bis 14, in dem die Verbindung der allgemeinen Formel (I) ausgewählt ist aus: N,N-Dimethylallylacetamid, N,N-Diethylallylacetamid, N,N-Dibutylallylacetamid, N,N-Dipropylallylacetamid oder Mischungen davon.

18. Elektrisches Kabel gemäß mindestens einem der vorhergehenden Ansprüche, in dem die Verbindung der allgemeinen Formel (I) in einer Menge von zwischen 0,01 Gew.% und 7 Gew.% vorliegt.

19. Elektrisches Kabel gemäß Anspruch 18, in dem die Verbindung der allgemeinen Formel (I) in einer Menge von zwischen 0,10 Gew.% und 3 Gew.% vorliegt.

20. Isolierzusammensetzung, welche ein Polyethylen, das mit mindestens einer Verbindung der allgemeinen Formel (I) modifiziert ist, umfaßt: 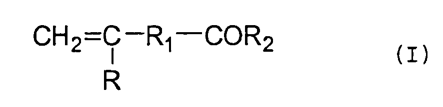 in der:
R H oder CH₃ bedeutet;
R₁ eine lineare oder verzweigte C₁-C₈-Alkylengruppe bedeutet;
R₂ bedeutet OH; eine Gruppe NR₄R₅, in der R₄ und R₅, die gleich oder verschieden sein können, H oder eine lineare oder verzweigte C₁-C₄-Alkylgruppe bedeuten.

21. Isolierzusammensetzung gemäß Anspruch 20, in der das Polyethylen gemäß Ansprüchen 3 bis 14 definiert ist.

22. Isolierzusammensetzung gemäß Anspruch 20 oder 21, in der die Verbindung der allgemeinen Formel (I) gemäß Ansprüchen 15 bis 17 definiert ist.

23. Isolierzusammensetzung gemäß mindestens einem der Ansprüche 20 bis 22, in der die Verbindung der allgemeinen Formel (I) in einer Menge von zwischen 0,01 Gew.% und 7 Gew.% vorliegt.

24. Isolierzusammensetzung gemäß Anspruch 23, in der die Verbindung der allgemeinen Formel (I) in einer Menge von zwischen 0,10 Gew.% und 3 Gew.% vorliegt.

25. Verfahren zur Verringerung der Akkumulation von Raumladungen in einem elektrischen Kabel während der Hochspannungsgleichstromübertragung oder -verteilung, das mindestens einen Leiter und mindestens eine extrudierte Isolierüberzugsschicht, die aus einer Polymerzusammensetzung besteht, die ein Polyethylen umfaßt, umfaßt, wobei das Verfahren die Modifizierung des Polyethylens mit mindestens einer Verbindung der allgemeinen Formel (I) umfaßt: 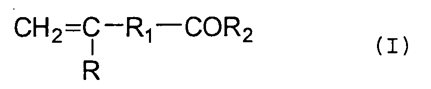 in der:
R H oder CH₃ bedeutet;
R₁ eine lineare oder verzweigte C₁-C₈-Alkylengruppe bedeutet;
R₂ bedeutet OH; eine Gruppe NR₄R₅, in der R₄ und R₅, die gleich oder verschieden sein können, H oder eine lineare oder verzweigte C₁-C₄-Alkylgruppe bedeuten.

26. Verfahren gemäß Anspruch 25, in dem das Polyethylen in den Ansprüchen 3 bis 14 definiert ist.

27. Verfahren gemäß Anspruch 25 oder 26, in dem die Verbindung der allgemeinen Formel (I) in den Ansprüchen 15 bis 17 definiert ist.

28. Verfahren gemäß mindestens einem der Ansprüche 25 bis 27, in dem die Verbindung der allgemeinen Formel (I) in einer Menge von zwischen 0,01 Gew.% und 7 Gew.% vorliegt.

29. Verfahren gemäß Anspruch 28, in dem die Verbindung der allgemeinen Formel (I) in einer Menge von zwischen 0,10 Gew.% und 3 Gew.% vorliegt.

## Revendications

1. Câble électrique comprenant au moins un conducteur et au moins une couche extrudée de revêtement isolant, constituée d'une composition de polymère comprenant un polyéthylène modifié avec au moins un composé de formule générale (I) : 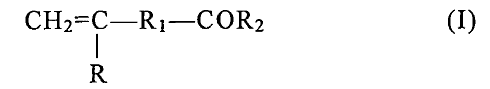 dans laquelle :
- R représente un atome d'hydrogène H ou un groupe méthyle CH₃,
- R₁ représente un groupe alkylène en C₁₋₈, linéaire ou ramifié,
- et R₂ représente un groupe hydroxyle OH ou un groupe de formule NR₄R₅ où R₄ et R₅ représentent des entités identiques ou différentes et représentent chacun un atome d'hydrogène ou un groupe alkyle en C₁₋₄, linéaire ou ramifié.

2. Câble électrique conforme à la revendication 1, dans lequel R₁ représente un groupe alkylène en C₁₋₈ linéaire.

3. Câble électrique conforme à la revendication 1 ou 2, dans lequel le polyéthylène est un homopolymère d'éthylène ou un copolymère d'éthylène et d'au moins une α-oléfine, présentant une masse volumique valant de 0,860 à 0,970 g/cm³.

4. Câble électrique conforme à la revendication 3, dans lequel le polyéthylène est un homopolymère d'éthylène ou un copolymère d'éthylène et d'au moins une α-oléfine, présentant une masse volumique valant de 0,865 à 0,940 g/cm³.

5. Câble électrique conforme à la revendication 3 ou 4, dans lequel ladite α-oléfine est une oléfine de formule générale CH₂=CH-R' où R' représente un groupe alkyle linéaire ou ramifié, comportant 1 à 10 atomes de carbone.

6. Câble électrique conforme à la revendication 5, dans lequel ladite α-oléfine est choisie parmi les propylène, 1-butène, 1-pentène, 4-méthyl-1-pentène, 1-hexène, 1-octène et 1-dodécène, ainsi que leurs mélanges.

7. Câble électrique conforme à l'une des revendications précédentes, dans lequel le polyéthylène est choisi parmi les suivants : un polyéthylène haute densité, dont la masse volumique vaut au moins 0,940 g/cm³, un polyéthylène moyenne densité, dont la masse volumique vaut de 0,926 à 0,940 g/cm³ et un polyéthylène basse densité ou un polyéthylène basse densité linéaire, dont la masse volumique vaut de 0,910 à 0,926 g/cm³.

8. Câble électrique conforme à l'une des revendications 1 à 7, dans lequel le polyéthylène a été modifié, par greffage préalable, avec au moins un composé de formule générale (1).

9. Câble électrique conforme à la revendication 8, dans lequel le polyéthylène n'est pas réticulé.

10. Câble électrique conforme à la revendication 8, dans lequel le polyéthylène est réticulé.

11. Câble électrique conforme à l'une des revendications 1 à 7, dans lequel le polyéthylène a été modifié par greffage, avec au moins un composé de formule générale (I), au cours d'une opération de réticulation de la composition de polymère qui constitue la couche de revêtement isolant.

12. Câble électrique conforme à l'une des revendications 1 à 7, dans lequel le polyéthylène a été modifié par copolymérisation d'éthylène et d'au moins un composé de formule générale (I).

13. Câble électrique conforme à la revendication 12, dans lequel le polyéthylène n'est pas réticulé.

14. Câble électrique conforme à la revendication 12, dans lequel le polyéthylène est réticulé.

15. Câble électrique conforme à l'une des revendications précédentes, dans lequel le composé de formule générale (I) est choisi parmi l'acide vinyl-acétique, l'acide allyl-acétique, l'acide 4-méthyl-4-penténoïque, l'acide 3-penténoïque et l'acide 10-undécénoïque, ainsi que leurs mélanges.

16. Câble électrique conforme à la revendication 15, dans lequel le composé de formule générale (I) est de l'acide allyl-acétique.

17. Câble électrique conforme à l'une des revendications 1 à 14, dans lequel le composé de formule générale (I) est choisi parmi les N,N-diméthyl-allylacétamide, N,N-diéthyl-allylacétamide, N,N-dibutyl-allylacétamide et N,N-dipropyl-allylacétamide, ainsi que leurs mélanges.

18. Câble électrique conforme à l'une des revendications précédentes, dans lequel le composé de formule générale (I) se trouve présent en une proportion pondérale de 0,01 à 7 %.

19. Câble électrique conforme à la revendication 18, dans lequel le composé de formule générale (I) se trouve présent en une proportion pondérale de 0,10 à 3 %.

20. Composition isolante, comprenant un polyéthylène modifié avec au moins un composé de formule générale (I) : 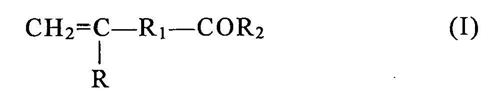 dans laquelle:
- R représente un atome d'hydrogène H ou un groupe méthyle CH₃,
- R₁ représente un groupe alkylène en C₁₋₈, linéaire ou ramifié,
- et R₂ représente un groupe hydroxyle OH ou un groupe de formule NR₄R₅ où R₄ et R₅ représentent des entités identiques ou différentes et représentent chacun un atome d'hydrogène ou un groupe alkyle en C₁₋₄, linéaire ou ramifié.

21. Composition isolante conforme à la revendication 20, dans laquelle le polyéthylène est tel que défini dans l'une des revendications 3 à 14.

22. Composition isolante conforme à la revendication 20 ou 21, dans laquelle le composé de formule générale (I) est tel que défini dans l'une des revendications 15 à 17.

23. Composition isolante conforme à l'une des revendications 20 à 22, dans laquelle le composé de formule générale (I) se trouve présent en une proportion pondérale de 0,01 à 7 %.

24. Composition isolante conforme à la revendication 23, dans laquelle le composé de formule générale (I) se trouve présent en une proportion pondérale de 0,10 à 3 %.

25. Procédé permettant de réduire, pendant la transmission ou la distribution de courant continu sous haute tension, l'accumulation de charges d'espace dans un câble électrique comprenant au moins un conducteur et au moins une couche extrudée de revêtement isolant, constituée d'une composition de polymère comprenant un polyéthylène, lequel procédé comporte le fait de modifier ce polyéthylène avec au moins un composé de formule générale (I) : 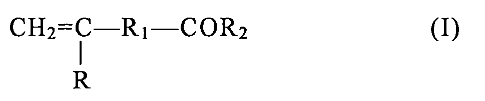 dans laquelle :
- R représente un atome d'hydrogène H ou un groupe méthyle CH₃,
- R₁ représente un groupe alkylène en C₁₋₈, linéaire ou ramifié,
- et R₂ représente un groupe hydroxyle OH ou un groupe de formule NR₄R₅ où R₄ et R₅ représentent des entités identiques ou différentes et représentent chacun un atome d'hydrogène ou un groupe alkyle en C₁₋₄, linéaire ou ramifié.

26. Procédé conforme à la revendication 25, dans lequel le polyéthylène est tel que défini dans l'une des revendications 3 à 14.

27. Procédé conforme à la revendication 25 ou 26, dans lequelle le composé de formule générale (I) est tel que défini dans l'une des revendications 15 à 17.

28. Procédé conforme à l'une des revendications 25 à 27, dans lequel le composé de formule générale (I) est employé en une proportion pondérale de 0,01 à 7 %.

29. Procédé conforme à la revendication 28, dans lequel le composé de formule générale (I) est employé en une proportion pondérale de 0,10 à 3 %.
